# EUROPÄISCHE PATENTSCHRIFT

(11) **EP 3 462 680 B1**
(45) Veröffentlichungstag und Bekanntmachung des Hinweises auf die Patenterteilung: **16.12.2020**
(21) Anmeldenummer: 18183057.1
(22) Anmeldetag: 12.07.2018
(51) Int. Cl.: H04L 12/40

(54) **BUSSYSTEM UND SLAVE-EINHEIT FÜR EIN BUSSYSTEM**
BUS SYSTEM AND A SLAVE UNIT FOR A BUS SYSTEM
SYSTÈME DE BUS ET UNITÉ ESCLAVE POUR UN SYSTÈME DE BUS

(30) Priorität: 27.09.2017 DE 102017122437
(43) Veröffentlichungstag der Anmeldung: 03.04.2019
(73) Patentinhaber: Dr. Johannes Heidenhain GmbH, 83301 Traunreut (DE)
(72) Erfinder: HUBER, Manfred, 83349 Palling (DE); FLEISCHMANN, Thomas, 83410 Laufen (DE)

(56) Entgegenhaltungen:
- DE-A1-102015 117 019
- DE-B3-102017 001 733
- US-A1- 2016 205 066

## Beschreibung

Diese Schrift betrifft Ausführungsformen eines Bussystems und sowie Ausführungsformen einer Slave-Einheit für ein Bussystem.

Bussysteme, beispielsweise EIA-485 kompatible Bussysteme, werden z.B. in der Automatisierungstechnik eingesetzt, um mittels einer Master-Einheit eine Vielzahl Slave-Einheiten zu steuern.

Die Steuerung der Slave-Einheiten durch die Master-Einheit kann das Aussenden eines sogenannten Anforderungssignals (auch als "Request" bezeichnet) beinhalten, welches von der Master-Einheit mit einer die designierte Slave-Einheit angegebenen Adresse versehen wird. Außerdem kann über ein solches Bussystem auch eine Slave-Einheit ein Antwortsignal (auch als "Response" bezeichnet) an die Master-Einheit übersenden.

Beispielsweise können derartige Bussysteme eine Daisy-Chain-Konfiguration aufweisen, gemäß der eine erste Slave-Einheit direkt mit der Master-Einheit verbunden ist. Die weiteren Slave-Einheiten sind jeweils über ihre Vorgänger-Slave-Einheiten mit der Master-Einheit verbunden, und so entsteht eine Kette aus seriell verschalteten Slave-Einheiten, woraus sich der Begriff "Daisy Chain" ableitet.

Ein Signal von der Master-Einheit, beispielsweise das Anforderungssignal, kann einer Slave-Einheit nur über ihre Vorgänger-Slave-Einheit(en) zugeleitet werden, und ein Signal von der Slave-Einheit für die Master-Einheit, beispielsweise das Antwortsignal, kann der Master-Einheit nur über ihre Vorgänger-Slave-Einheit(en) zugeleitet werden.

Eine Slave-Einheit kann z.B. Teil eines Messgeräts sein, und eine Master-Einheit kann Teileines Steuergeräts einer Werkzeugmaschine sein.

Je nach Anwendungsfall kann es also vorkommen, dass die Slave-Einheiten zum einen durchaus mehrere Meter voneinander beabstandet sind und dass ein Signal, das die Master-Einheit an eine der letzteren Slave-Einheiten senden möchte, von durchaus mehreren Vorgänger-Slave-Einheiten weitergeleitet werden muss.

Gleichzeitig kann es erforderlich sein, dass das Signal möglichst verzögerungsfrei von der Master-Einheit zu der designierten Slave-Einheit gelangt, was eine zeitaufwendige Zwischenverarbeitung des weiterzuleitenden Signals in den jeweiligen Slave-Einheiten verbietet.

Insbesondere soll eine Slave-Einheit ein an sie gerichtetes Signal möglichst fehlerfrei decodieren können, was voraussetzen kann, dass das Signal möglichst ohne Informationsverlust von der Master-Einheit zu der designierten Slave-Einheit übertragen wird.

Für die Übertragung von Signalen einer Slave-Einheit hin zur Master-Einheit können analoge Anforderungen gestellt werden.

Vor diesem Hintergrund stellt sich die Aufgabe, ein Bussystem mit einer Daisy-Chain-Konfiguration vorzuschlagen, das eine schnelle und zuverlässige Übertragung von Signalen erlaubt.

Gemäß einem ersten Aspekt wird diese Aufgabe gelöst durch ein Bussystem, das eine Daisy-Chain-Konfiguration aufweist und eine Master-Einheit sowie eine Vielzahl Slave-Einheiten umfasst. Die Slave-Einheiten sind der Master-Einheit über eine Leitungsanordnung seriell nachgeschaltet, wobei eine der Master-Einheit zuerst nachgeschaltete erste Slave-Einheit ausgebildet ist, ein von der Master-Einheit bereitgestelltes und über einen ersten Leitungsabschnitt der Leitungsanordnung empfangenes Anforderungssignal zu invertieren und als invertiertes Anforderungssignal auf einem zweiten, zu einer benachbarten zweiten Slave-Einheit führenden Leitungsabschnitt der Leitungsanordnung auszugeben.

Gemäß einem zweiten Aspekt wird die Aufgabe gelöst durch eine Slave-Einheit für ein Bussystem, wobei das Bussystem eine Daisy-Chain-Konfiguration aufweist und eine Master-Einheit umfasst, der über eine Leitungsanordnung eine Vielzahl Slave-Einheiten seriell nachgeschaltet werden können. Die Slave-Einheit ist ausgebildet, ein von der Master-Einheit bereitgestelltes und über einen ersten Leitungsabschnitt der Leitungsanordnung empfangenes Anforderungssignal zu invertieren und als invertiertes Anforderungssignal auf einem zweiten, zu einer benachbarten zweiten Slave-Einheit führenden Leitungsabschnitt der Leitungsanordnung auszugeben.

Nachstehend wird auf beide Aspekte Bezug genommen werden. Die beiden Aspekte schließen die Erkenntnis ein, dass es bei einem Bussystem mit einer Daisy-Chain-Konfiguration aufgrund der in den Slave-Einheiten stattfindenden Weiterleitung von Signalen zu einer Fortpflanzung einer durch die Weiterleitung entstehenden Signalverzerrung kommen kann, was letztlich dazu führt, dass ab einer bestimmten Länge der Leitungsanordnung bzw. ab einer bestimmten Anzahl von Slave-Einheiten die Signale nicht mehr ohne Informationsverlust übertragen bzw. nicht mehr fehlerfrei decodiert werden können.

Eine derartige Fortpflanzung einer Signalverzerrung entsteht beispielsweise dann, wenn die Slave-Einheiten eingangsseitig und/oder ausgangsseitig mit einem Sendeempfänger (Transceiver) ausgestattet sind, der eine unsymmetrische Schaltschwelle aufweist. Derartige Sendeempfänger sind zum Beispiel eingangsseitig vorgesehen, um ein über einen Leitungsabschnitt eingehendes Anforderungssignal zu empfangen und über denselben Leitungsabschnitt ein Antwortsignal weiterzuleiten, und ausgangsseitig, um über den dort eingehenden Leitungsabschnitt ein Antwortsignal zu empfangen und um auf diesem Leitungsabschnitt ein weiterzuleitendes Anforderungssignal auszugeben.

Der jeweilige Sendeempfänger kann ausgebildet sein, ein über den Leitungsabschnitt eingehendes Signal in ein Bitmuster für eine slaveeinheitinterne Logikkomponente zu übersetzen und, umgekehrt, ein von der Logikkomponente bereitgestelltes Bitmuster in ein Signal zu übersetzten, das auf den Leitungsabschnitt ausgegeben werden kann.

Einer steigenden Signalflanke, die von dem Sendeempfänger zum Beispiel als ein Übergang von logisch "0" zu logisch "1" zu interpretieren ist, ist ein erster Schwellenwert zugeordnet, bei dessen Erreichen das Bitmuster von logisch "0" zu logisch "1" wechselt. Einer fallenden Signalflanke, die von dem Sendeempfänger zum Beispiel als ein Übergang von logisch "1" zu logisch "0" zu interpretieren ist, kann ein zweiter Schwellenwert zugeordnet sein, bei dessen Erreichen das Bitmuster von logisch "1" zu logisch "0" wechselt.

Die Problematik der oben genannten Fortpflanzung der Signalverzerrung kann insbesondere dann entstehen, wenn die beiden Schwellenwerte nicht identisch zueinander sind, die Schaltschwellen also unsymmetrisch sind. Im Bitmuster kann dies zum Beispiel zu einer Verbreiterung von logisch "1" Bitpulsen und damit zu einer entsprechenden Verschmälerung von logisch "0" Bitpulsen führen, wenn der erste Schwellenwert kleiner ist als der zweite Schwellenwert.

Da bei Weiterleitung des Signals das von dem zum Beispiel eingangsseitig platzierten Sendeempfänger generierte Bitmuster von dem ausgangsseitig platzierten Sendeempfänger wieder in ein Signal umgewandelt wird, das auf dem Leitungsabschnitt ausgegeben werden kann, entstehen auf diesem Leitungsabschnitt Signale, bei denen die Schaltflanken nicht mehr denselben Abstand voneinander haben, sondern sich breite Pulse und schmale Pulse abwechseln. Diese Signalverzerrung pflanzt sich dann in der nächsten Slave-Einheit fort, sofern diese das betreffende Signal ebenfalls weiterzuleiten hat.

Gemäß den oben beschriebenen beiden Aspekten wird dieser Signalverzerrung entgegengewirkt, indem die erste Slave-Einheit eine Invertierung des weiterzuleitenden Anforderungssignals vornimmt.

Nachstehend werden weitere Ausführungsformen beschrieben werden. Die zusätzlichen Merkmale dieser Ausführungsformen können miteinander als auch mit den oben schon beschriebenen optionalen Merkmalen zur Ausbildung weiterer Ausführungsbeispiele kombiniert werden, sofern nicht ausdrücklich etwas Gegenteiliges angegeben ist.

Hiernach ist es bei einer Ausführungsform zweckmäßig, dass die erste Slave-Einheit weiter ausgebildet ist, ein von der zweiten Slave-Einheit bereitgestelltes und über den zweiten Leitungsabschnitt empfangenes invertiertes Antwortsignal zu invertieren und als nicht-invertiertes Antwortsignalsignal auf dem ersten, zur Master-Einheit führenden Leitungsabschnitt auszugeben.

Entsprechend ist bei einer Weiterbildung des Bussystems auch die zweite Slave-Einheit ausgebildet. Insbesondere kann die zweite Slave-Einheit ausgebildet sein, das von der ersten Slave-Einheit ausgegebene und über den zweiten Leitungsabschnitt empfangene invertierte Anforderungssignal zu invertieren und als nicht-invertiertes Anforderungssignal auf einem dritten, zu einer benachbarten dritten Slave-Einheit führenden Leitungsabschnitt der Leitungsanordnung auszugeben. Zweckmäßig ist es weiterhin, wenn die zweite Slave-Einheit darüber hinaus ausgebildet ist, ein von der dritten Slave-Einheit bereitgestelltes und über den dritten Leitungsabschnitt empfangenes nicht-invertiertes Antwortsignal zu invertieren und als das invertierte Antwortsignal auf dem zweiten, zur ersten Slave-Einheit führenden Leitungsabschnitt auszugeben.

Die Leitungsanordnung des Bussystems, das die Daisy-Chain-Konfiguration aufweist, kann also die Vielzahl von Leitungsabschnitten umfassen, wobei zwischen der Master-Einheit und der Slave-Einheit der erste Leitungsabschnitt vorgesehen ist, zwischen der ersten Slave-Einheit und der (betrachtet aus dem Blick der Master-Einheit) zweiten Slave-Einheit der zweite Leitungsabschnitt, zwischen der zweiten Slave-Einheit und der dritten Slave-Einheit der dritte Leitungsabschnitt usw. Über jeden Leitungsabschnitt kann das (invertierte oder nicht-invertierte) Anforderungssignal übertragen werden, als auch das (invertierte oder nicht- invertierte) Antwortsignal.

Bei einer Ausführungsform sind die Master-Einheit und die Slave-Einheiten des Bussystems so konfiguriert, dass in jedem Leitungsabschnitt die Anforderungssignale und die Antwortsignale entweder beide invertiert oder beide nicht-invertiert sind. Somit gibt es sozusagen wenigstens einen regulären (nicht-invertierten) Leitungsabschnitt und wenigstens einen invertierten Leitungsabschnitt. Entsprechend dem Vorstehenden ist es zweckmäßig, wenn diese unterschiedlichen Leitungsabschnitte alternierend zueinander angeordnet sind. Damit die Konfiguration der Master-Einheit nicht geändert werden muss, ist es weiter zweckmäßig, den ersten Leitungsabschnitt als regulären (nicht-invertierten) Leitungsabschnitt zu gestalten, auf dem die Signale nicht invertiert sind. So kann die Master-Einheit das Anforderungssignal in herkömmlicher Weise auf den ersten Leitungsabschnitt geben, und die erste Slave-Einheit kann so konfiguriert sein, dass sie sicherstellt, dass sie ein an die Master-Einheit gerichtetes Antwortsignal der Master-Einheit nicht-invertiert über den ersten Leitungsabschnitt zuleitet. Alternativ ist es möglich, dass die Master-Einheit an die Anzahl der Slave-Einheiten des vorliegenden Bussystems angepasst ist und ggf. ausgebildet ist, das Anforderungssignal invertiert auf dem ersten Leistungsabschnitt auszugeben und über diesen ein invertiertes Antwortsignal zu empfangen.

Die Signale, also insbesondere das Anforderungssignal als auch das Antwortsignal, die über das Bussystem übertragen werden, können manchestercodiert sein. In Betracht kommen auch andere Codierungen, wobei Codierungen, die gleichanteilsfrei sind, zweckmäßig sind. Z.B. kommt die sog. 4B5B- oder 8B10B-Codierung zum Einsatz.

Als Anforderungssignal wird vorliegend ein Signal verstanden, dass von der Master-Einheit an eine der Slave-Einheiten gerichtet wird. Das Anforderungssignal beinhaltet beispielsweise einen Befehl und/oder Daten. Als Antwortsignal wird vorliegend ein Signal verstanden, das von einer der Slave-Einheiten an die Master-Einheit gerichtet wird. Das Antwortsignal beinhaltet bspw. Daten, die die Master-Einheit mittels eines vorherigen Anforderungssignals angefragt hat, z.B. Positionsdaten in Antwort auf ein Anforderungssignal in Gestalt eines Positionsanforderungsbefehls.

Die Slave-Einheiten können ausgebildet sein, empfangene und weiterzuleitenden Signale, beispielsweise ein weiterzuleitendes Anforderungssignal oder ein weiterzuleitendes Antwortsignal, verzögerungsfrei auf dem betreffenden Leitungsabschnitt auszugeben. Beispielsweise werden weiterzuleitende Signale keiner Bit-Recovery unterzogen, sondern ohne vorherige Auswertung weitergeleitet.

Nach einer Ausführungsform ist jede Slave-Einheit ausgebildet, jedes empfangene Anforderungssignal und jedes empfangene Antwortsignal ohne vorherige Auswertung weiterzuleiten. Außerdem kann jede Slave-Einheit ausgebildet sein, nach der Weiterleitung oder parallel zur Weiterleitung jedes Anforderungssignal auszuwerten, um zu überprüfen, ob das Anforderungssignal an sie gerichtet ist oder nicht.

Das Bussystem kann für eine differentielle Signalübertragung ausgebildet sein. Z.B. ist es ausgebildet, gemäß den Vorgaben des EIA-485 Standards betrieben zu werden. Diese Standardkonformität betrifft insbesondere die Übertragung der Signale auf den jeweiligen Leitungsabschnitten.

Was den Betrieb der Master-Einheit bzw. der Slave-Einheiten anbelangt, so können diese jeweils eine Logikkomponente umfassen, die für eine massebezogene ("single-ended") Signalverarbeitung konfiguriert ist. Z.B. kann die jeweilige Logikkomponente eine TTL- oder eine LVTTL (Low Voltage TTL)-Konfiguration (engl.: Transistor-Transistor-Logic) aufweisen. Beispielsweise sind die Logikkomponenten ausgebildet, einen proprietären Standard umsetzen.

Wie schon eingangs erläutert, kann bei einer Ausführungsform des Bussystems vorgesehen sein, dass jede der Slave-Einheiten einen Eingangs-Sendeempfänger mit unsymmetrischer Schaltschwelle aufweist. Ebenso kann ein Ausgangs-Sendeempfänger mit unsymmetrischer Schaltschwelle vorgesehen sein. Hier bezieht sich der Begriff "Eingangs-Sendeempfänger" auf einen Sendeempfänger, der die Schnittstelle zu jenem Leitungsabschnitt bildet, über den Anforderungssignale der Master-Einheit bzw. weitergeleitete Anforderungssignale empfangen werden, und der Begriff "Ausgangs-Sendeempfänger" kann sich auf einen Sendeempfänger beziehen, der die Schnittstelle zu jenem Leitungsabschnitt bildet, über den die Slave-Einheit Anforderungssignale weiterleitet und über den die Slave-Einheit Antwortsignale empfängt.

Beide Sendeempfänger können im Prinzip identisch aufgebaut sein. Zum Beispiel sind beide Sendeempfänger mit dem EIA-485 Standard kompatibel. Sie können jeweils ausgebildet sein, ein über den betreffenden Leitungsabschnitt eingehendes Signal in ein Bitmuster für die Logikkomponente der Slave-Einheit umzuwandeln (zum Beispiel ein an die Slave-Einheit gerichtetes Anforderungssignal), und ein von der Logikkomponente der Slave-Einheit bereitgestelltes Bitmuster in ein Signal (zum Beispiel ein Antwortsignal) umzuwandeln und dieses auf dem betreffenden Leitungsabschnitt auszugeben.

Bei dem Bussystem sind beispielsweise mindestens zwei Slave-Einheiten vorgesehen, die zum Beispiel in einem Abstand von mindestens einem halben Meter zueinander angeordnet sind. Aufgrund der oben beschriebenen Signalinvertierung in den Slave-Einheiten können jedoch auch deutlich mehr als zwei Slave-Einheiten in dem Bussystem vorgesehen werden, die insbesondere auch über längere Leitungsabschnitte miteinander verbunden werden können.

In dem Bussystem kann jede Slave-Einheit mit einer eindeutigen, aufsteigend nummerierten Adresse versehen sein. Zum Beispiel weist die erste Slave-Einheit, die direkt benachbart zu der Master-Einheit angeordnet ist, die höchste Adresse auf, und die letzte Slave-Einheit, also jene, die am weitesten von der Master-Einheit entfernt ist, die niedrigste Adresse. Die Signalinvertierung kann in Abhängigkeit von der Adresse gesteuert werden, was mit Bezug auf die Figuren weiter unten näher ausgeführt werden wird.

Aufgrund der Daisy-Chain-Konfiguration des Bussystems müssen die Slave-Einheiten, die zwischen der Master-Einheit und der letzten Slave-Einheit angeordnet sind, eine Signalweiterleitung implementieren, gemäß der diese jedes Anforderungssignal und jedes Antwortsignal weiterleiten.

Das Bussystem kann zum Beispiel im Rahmen der Automatisierungstechnik verwendet werden. Zum Beispiel bildet wenigstens eine der Slave-Einheiten des Bussystems einen Teil eines Messgerätes aus, wie eines Drehgebers, eines Winkelmessgerätes, eines Längenmessgerätes, eines Messtasters oder eines schaltenden Tasters. Bei einer Ausführungsform sind alle Slave-Einheiten Teil eines Messgeräts. Die Master-Einheit kann z.B. Teil einer übergeordneten Werkzeugmaschinensteuerung sein.

Weitere Einzelheiten und Vorteile der Erfindung werden bei der nachfolgenden Beschreibung einiger Ausführungsbeispiele anhand der Figuren deutlich werden.

Es zeigen:
- Figuren 1A -B: jeweils exemplarisch und schematisch ein Bussystem gemäß einer oder mehreren Ausführungsformen;
- Figur 2: exemplarisch und schematisch eine Veranschaulichung einer sich fortsetzenden Signalverzerrung in einem Bussystem;
- Figur 3: exemplarisch und schematisch eine Veranschaulichung einer Vermeidung einer sich fortsetzenden Signalverzerrung in einem Bussystem gemäß einer oder mehreren Ausführungsformen;
- Figur 4: exemplarisch und schematisch eine Slave-Einheit gemäß einer oder mehreren Ausführungsformen; und
- Figuren 5A-B: jeweils exemplarisch und schematisch einen Eingangs-Sendeempfänger und einen Ausgangs-Sendeempfänger einer Slave-Einheit gemäß einer oder mehreren Ausführungsformen.

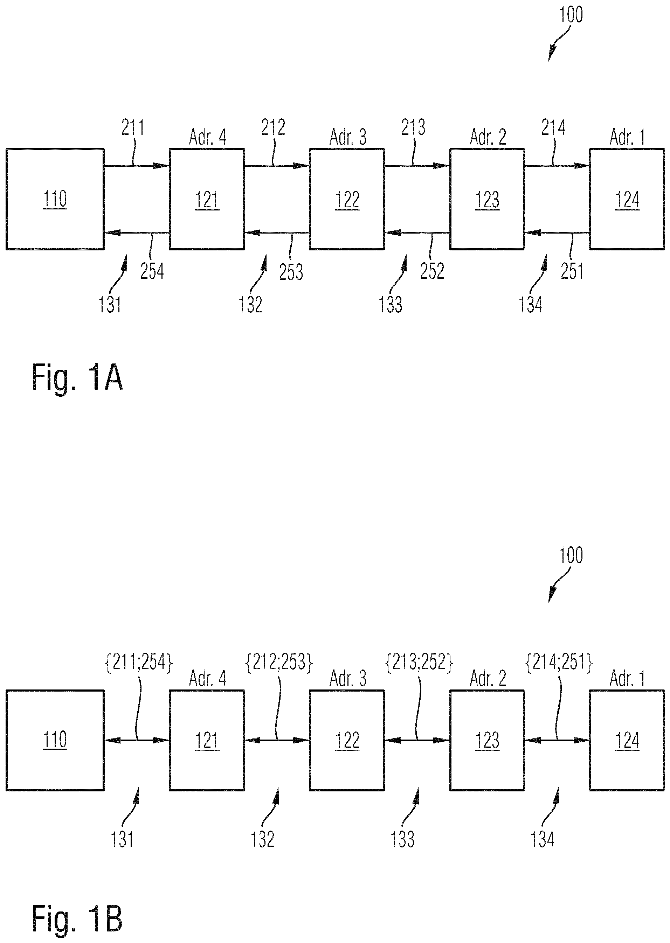

Die Figur 1A und B veranschaulichen jeweils schematisch und exemplarisch ein Bussystem 100 gemäß einer oder mehreren Ausführungsformen. Nachstehend wird auf beide Varianten Bezug genommen werden.

Das Bussystem 100 weist eine Daisy-Chain-Konfiguration auf. Es umfasst eine Master-Einheit 110 sowie eine Vielzahl von Slave-Einheiten 121-124. Die Slave-Einheiten 121-124 sind der Master-Einheit 110 über eine Leitungsanordnung aus einer Vielzahl von Leitungsabschnitten 131-134 seriell nachgeschaltet. Eine erste Slave-Einheit 121 ist über einen ersten Leitungsabschnitt 131 mit der Master-Einheit 110 verbunden. Eine zweite Slave-Einheit 122 ist über einen zweiten Leitungsabschnitt 132 mit der ersten Slave-Einheit 121 verbunden. Eine dritte Slave-Einheit 123 ist mit der zweiten Slave-Einheit 122 über einen dritten Leitungsabschnitt 133 verbunden. Und eine vierte Slave-Einheit 124 ist über einen vierten Leitungsabschnitt 134 mit der dritten Slave-Einheit 123 verbunden.

Es versteht sich natürlich, dass auch mehr oder weniger als die vier beispielhaft dargestellten Slave-Einheiten 121-124 vorgesehen sein können.

Das Bussystem 100 ist zum Beispiel für eine differentielle Signalübertragung ausgebildet. Bei einer Ausführungsform kann das Bussystem100 gemäß den Vorgaben des EIA-485 Standards betrieben werden. Die Signale, die über die Leitungsabschnitte 131-134 übertragen werden, können also differentiell über ein oder mehrere Leitungspaare übertragen werden. Zum Beispiel sind die von der Master-Einheit 110 bzw. den Slave-Einheiten 121-124 ausgegebenen Signale manchestercodiert. Auch andere Codierungsarten kommen in Betracht, insbesondere solche, die keinen Gleichanteil aufweisen.

Gemäß der in der Fig. 1A dargestellten Ausführungsform findet eine sog. Voll-Duplex-Übertragung statt. Dabei ist für jede Übertragungsrichtung (von der Master-Einheit 110 zu den Slave-Einheiten 121-124 und in umgekehrte Richtung) ein unidirektionaler Übertragungskanal vorgesehen.

Bei der Ausführungsform gemäß der Fig. 1B erfolgt eine Übertragung im Halb-Duplex-Modus. Hierbei wird durch eine jeweilige Slave-Einheit 121-124 bzw. durch die Master-Einheit 110 auf einem betreffenden Leitungsabschnitt entweder gesendet oder empfangen.

Die Erfindung ist jedoch nicht auf diese beiden oder einen dieser beiden Übertragungsmodi beschränkt.

Das Bussystem 100 kann zum Beispiel im Rahmen der Automatisierungstechnik Verwendung finden. So können die Slave-Einheiten 121-124 in einem größeren Abstand voneinander angeordnet sein, zum Beispiel in einem Abstand von mehreren Metern. Zum Beispiel bilden die Slave-Einheiten des Bussystems 100 jeweils einen Teil eines Messgerätes aus, wie eines Drehgebers, eines Winkelmessgerätes, eines Längenmessgerätes, eines Messtasters oder eines schaltenden Tasters. Die Master-Einheit 110 kann Teil einer übergeordneten Werkzeugmaschinensteuerung sein.

In diesem Bussystem 100 kann jede Slave-Einheit 121-124 mit einer eindeutigen, aufsteigend nummerierten Adresse versehen sein. Zum Beispiel weist die erste Slave-Einheit 121, die direkt benachbart zu der Master-Einheit 110 angeordnet ist, die höchste Adresse ("Adr. 4") auf, und die letzte Slave-Einheit, also jene, die am weitesten von der Master-Einheit 110 entfernt ist, hier die vierte Slave-Einheit 124, die niedrigste Adresse ("Adr. 1").

Aufgrund der Daisy-Chain-Konfiguration des Bussystems 100 implementieren die Slave-Einheiten 121-123, die zwischen der Master-Einheit 110 und der letzten Slave-Einheit 124 angeordnet sind, eine Signalweiterleitung, gemäß der diese sämtliche eingehende Anforderungssignale ("Request") und sämtliche Antwortsignale ("Response") weiterleiten. Diese Weiterleitung erfolgt verzögerungsfrei, indem zwischen Eingang des Signals und Weiterleitung keine Signalauswertung, wie eine Bit-Recovery oder dergleichen, erfolgt. Allerdings ist natürlich vorgesehen, dass jede Slave-Einheit parallel zur Weiterleitung oder danach prüft, ob das eingegangene Signal für sie bestimmt ist. Ggf. leitet sie also ein Anforderungssignal nicht nur weiter, sondern reagiert hierauf durch Ausgabe eines entsprechenden Antwortsignals.

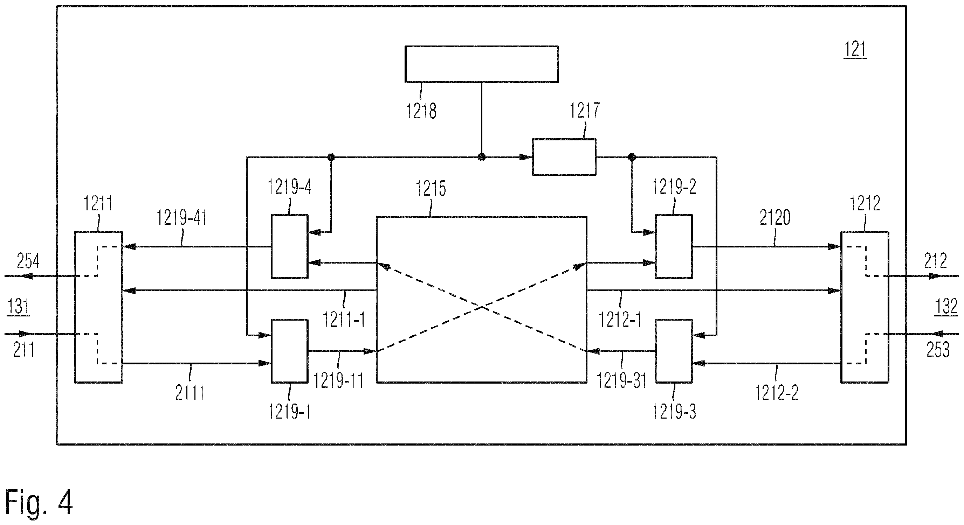

Hierzu weist jede Slave-Einheit einen Eingangs-Sendeempfänger und einen Ausgangs-Sendeempfänger auf, was anhand des Beispiels gemäß der Fig. 4 nachstehend etwas genauer erläutert werden soll.

Die Fig. 4 zeigt schematisch und exemplarisch ein Ausführungsbeispiel der ersten Slave-Einheit 121. Die übrigen Slave-Einheiten 122-124 können die gleichen Komponenten aufweisen.

Zum Beispiel weist die erste Slave-Einheit 121 einen Eingangs-Sendeempfänger 1211 auf, der ein von der Master-Einheit 110 bereitgestelltes und über den ersten Leitungsabschnitt 131 eingehendes Anforderungssignal 211 empfängt. Anderseits weist die erste Slave-Einheit 121 einen Ausgangs-Sendeempfänger 1212 auf, der ein von der zweiten Slave-Einheit 122 bereitgestelltes und über den zweiten Leitungsabschnitt 132 eingehendes Antwortsignal 253 empfängt.

Der Betrieb des Eingangs-Sendeempfängers 1211 sowie des Ausgangs-Sendeempfängers 1212 hängt von dem Modus ab, gemäß dem die Signale im Bussystem 100 übertragen werden.

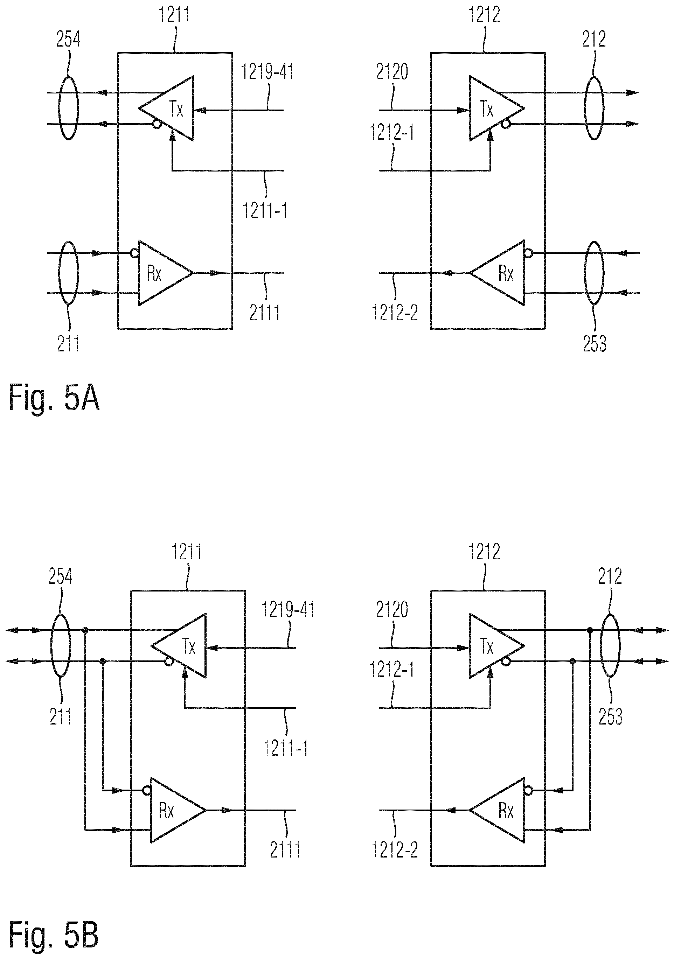

Wird beispielsweise der Voll-Duplex-Modus (gemäß Fig. 1A) gewählt, so ist eine Konfiguration entsprechend der Fig. 5A zweckmäßig, wonach in beide Übertragungsrichtungen stets gesendet werden kann, also die Slave-Einheit 121 gleichzeitig senden und empfangen kann. Bei dem Halb-Duplex-Modus (gemäß Fig. 1B) eignet sich die Variante entsprechend der Fig. 5B, bei der eine Umschaltung der Sendeempfänger 1211, 1212 erfolgt, je nach dem, ob ein Anforderungssignal empfangen werden soll oder ein Antwortsignal gesendet werden soll. Hierauf wird weiter unten näher eingegangen werden.

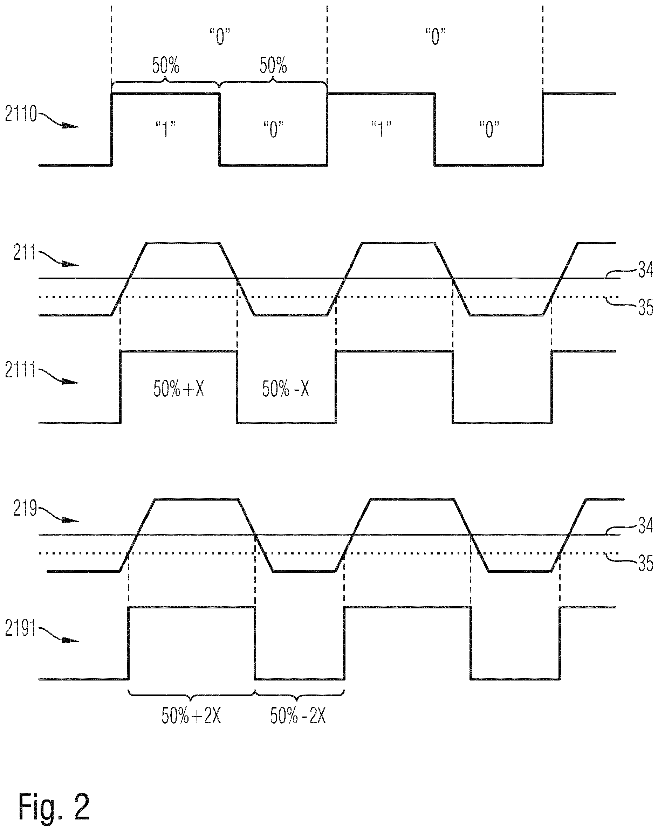

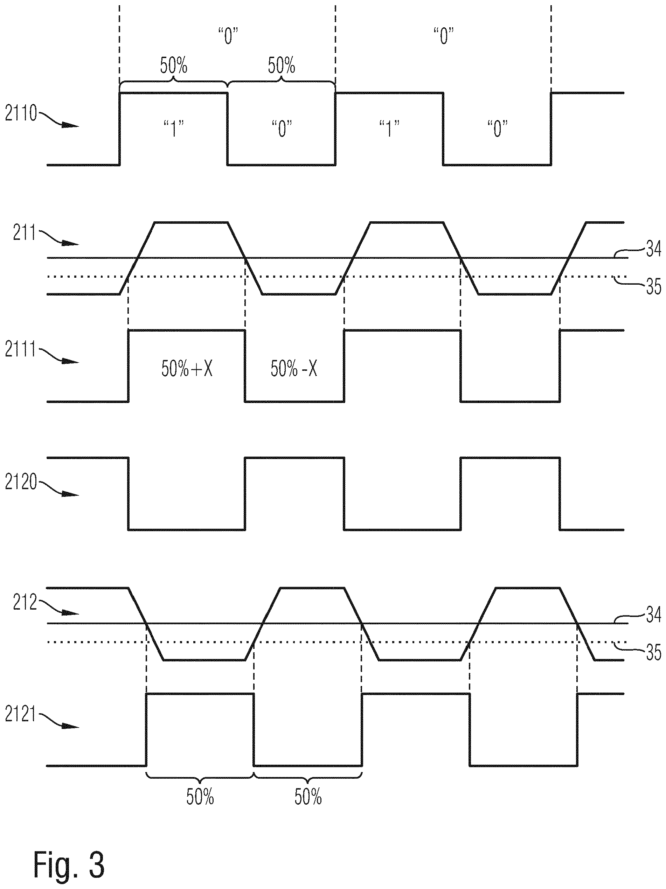

Ein Beispiel für das über den ersten Leitungsabschnitt 131 eingehende Anforderungssignal 211 ist in den Fig. 2 und 3 dargestellt, auf die nachstehend ebenfalls verwiesen wird. Die Beispiele entsprechend den Fig. 2 und 3 treffen sowohl auf den Voll-Duplex-Modus als auch auf den Halb-Duplex-Modus zu.

Das Anforderungssignal 211 besteht dort aus einer Pulsfolge, die die Master-Einheit 110 ausgehend von einem mastereinheitinternen Bitmuster 2110 erzeugt und auf dem ersten Leitungsabschnitt 131 ausgibt. Eine Teilpulsfolge "1-0" (von der zwei dargestellt sind) stellt zum Beispiel den Bitwert "0" dar. Umgekehrt stellt eine Teilpulsfolge "0-1" den Bitwert "1" dar. Bei dem dargestellten Beispiel enthält das Anforderungssignal also die Bitfolge "0" "0", wobei es sich versteht, dass diese Bitfolge nur einen Teil des Anforderungssignals darstellt, mit dem mitunter eine Vielzahl von Bits übertragen wird.

Der Eingangs-Sendeempfänger 1211 übersetzt das empfangene Anforderungssignal 211 in ein slaveeinheitinternes Bitmuster 2111 und führt dieses einer Logikkomponente 1215 der ersten Slave-Einheit 121 zu. Die Logikkomponente 1215 leitet das Signal ohne vorherige Auswertung, insbesondere ohne Bit-Recovery oder dergleichen, unmittelbar zum Ausgangs-Sendeempfänger 1212 weiter, was durch die gestrichelten Linien in der Logikkomponente 1215 angedeutet ist. Der Ausgangs-Sendeempfänger 1212 gibt das weitergeleitete Anforderungssignal 211 als Signal 212 auf dem zweiten Leitungsabschnitt 132 aus. Parallel dazu und unabhängig davon erfolgt in der Logikkomponente 1215 eine Prüfung, ob das Anforderungssignal 211 für die Slave-Einheit 121 bestimmt ist oder nicht. Entweder wird das Signal danach verworfen, oder die Slave-Einheit 121 reagiert, indem sie ein entsprechendes Antwortsignal 254 ausgibt.

In die andere Signalübertragungsrichtung kann in analoger Weise vorgegangen werden, was nachstehend also nur kurz erläutert werden soll. Zum Beispiel empfängt die erste Slave-Einheit 121 mittels des Ausgangs-Sendeempfängers 1212 ein von der zweiten Slave-Einheit 122 bereitgestelltes und über den zweiten Leitungsabschnitt 132 eingehendes Antwortsignal 253 (das invertiert sein kann, dazu sogleich), der dieses Signal 253, nach Umwandlung in ein Bitmuster, der Logikkomponente 1215 zuführt. Auch dieses Signal leitet die Logikkomponente 1215 unmittelbar dem Eingangs-Sendeempfänger 1211 zu, welcher das entsprechende Bitmuster dann in das Signal 254 umwandelt und auf dem ersten Leitungsabschnitt 131 ausgibt.

Sowohl der Eingangs-Sendeempfänger 1211 als auch der Ausgangs-Sendeempfänger 1212 können ausgebildet sein, differentielle Signale zu empfangen und differentielle Signale auszugeben. Beispielsweise sind sowohl der Eingangs-Sendeempfänger 1211 als auch der Ausgangs-Sendeempfänger 1212 mit dem EIA-485 Standard kompatibel.

Demgegenüber kann die Logikkomponente 1215 für eine massebezogene Signalverarbeitung konfiguriert sein. Z.B. weist die Logikkomponente 1215 eine TTL-Konfiguration oder eine LV-TTL-Konfiguration auf. Die Logikkomponente 1215 setzt beispielsweise einen proprietären Standard um.

Die Logikkomponente 1215 ist z.B. ausgebildet, durch Bereitstellung der Signale 1211-1 und 1212-1 Einfluss auf den Betrieb des Eingangs-Sendeempfängers 1211 und des Ausgangs-Sendeempfängers 1212 zu nehmen. Beispielsweise steuert die Logikkomponente 1215 den Eingangs-Sendeempfänger 1211 und den Ausgangs-Sendeempfängers 1212 in Abhängigkeit von dem Übertragungsmodus. Im Voll-Duplex-Modus (s. Fig. 1A und 5A) ermöglicht die Logikkomponente 1215 durch entsprechendes Setzen der Signale 1211-1 und 1212-1 (beispielsweise beide auf "1"), dass sowohl der Eingangs-Sendeempfänger 1211 als auch der Ausgangs-Sendeempfänger 1212 stets Signale auf dem betreffenden Leitungsabschnitt ausgeben und empfangen können. Im Halb-Duplex-Modus ermöglicht die Logikkomponente 1215 durch entsprechendes Setzen der Signale 1211-1 und 1212-1 (beispielsweise nur eines davon auf "1"), dass der Eingangs-Sendeempfänger 1211 entweder Signale über den/auf dem betreffenden Leitungsabschnitt empfängt oder ausgibt und/oder dass der Ausgangs-Sendeempfänger 1212 über den/auf dem betreffenden Leitungsabschnitt entweder Signale empfängt oder ausgibt.

Der Eingangs-Sendeempfänger 1211 und der Ausgangs-Sendeempfänger 1212 können in ähnlicher Weise ausgestaltet sein. Sie weisen jeweils ein Sendemodul TX und ein Empfangsmodul RX auf. Bei der Voll-Duplex-Variante (Fig. 1A und 5A) sind dem Sendemodul TX und dem Empfangsmodul RX separate Leitungsteilabschnitte zugeordnet. Es kann also zu jedem Zeitpunkt auf dem Leitungsabschnitt 131 gesendet und empfangen werden. Im Halb-Duplex-Modus (Fig. 1B und 5B) teilen sich das Sendemodul TX und das Empfangsmodul RX einen Leitungsteilabschnitt; folglich koordiniert die Logikkomponente mittels der Signale 1211-1 und 1212-1, ob empfangen oder gesendet wird, wie oben beschrieben worden ist.

Sowohl der Eingangs-Sendeempfänger 1211 als auch der Ausgangs-Sendeempfänger 1212 können eine unsymmetrische Schaltschwelle aufweisen, was mit Blick auf die Fig. 2 und 3 etwas näher erläutert werden soll.

Wie gesagt kann der Eingangs-Sendeempfänger 1211 das Anforderungssignal 211, das die Master-Einheit 110 basierend auf dem Bitmuster 2110 erzeugt hat, empfangen. Aus Gründen der Übersichtlichkeit ist hier nur eines der Signale des Differenzsignals dargestellt. Das mastereinheitinterne Bitmuster 2110 ist ursprünglich so ausgestaltet, dass jedem Bitwert zwei gleich breite Pulse zugeordnet sind (s. Angabe "50%" in Fig. 2). Der Bitwert "0" wird also durch die Teilpulsfolge "1-0" dargestellt, wie eingangs dargelegt. Hiervon ausgehend hat das von der Master-Einheit 110 erzeugte Anforderungssignal 211 eine Pulsfolge, bei dem jeder Bitwertdurch zwei etwa gleich breite Pulse "1-0" (Bitwert "0") oder "0-1" (Bitwert "1") von jeweils "50%" aufweist.

Der Eingangs-Sendeempfänger 1211 der ersten Slave-Einheit 121 übersetzt das empfangene Anforderungssignal 211 (das Gestalt der Pulsfolge vorliegt) in das slaveeinheitinterne Bitmuster 2111.

Dabei ist einer steigenden Signalflanke, die von dem Eingangs-Sendeempfänger 1211 zum Beispiel als ein Übergang von logisch "0" zu logisch "1" zu interpretieren ist, ein erster Schwellenwert 35 zugeordnet, bei dessen Erreichen das Bitmuster von logisch "0" zu logisch "1" wechselt. Einerfallenden Signalflanke, die von dem Eingangs-Sendeempfänger 1211 zum Beispiel als ein Übergang von logisch "1" zu logisch "0" zu interpretieren ist, ist ein zweiter Schwellenwert 34 zugeordnet, bei dessen Erreichen das Bitmuster von logisch "1" zu logisch "0" wechselt. Eine unsymmetrische Schaltschwelle bedeutet, dass der zweite Schwellenwert 34 betragsmäßig vom ersten Schwellenwert 35 abweicht.

So entsteht bei ungleichen Schwellenwerten 34, 35 z.B. das slaveeinheitinterne Bitmuster 2111, bei dem die jeweils eine logische "1" darstellende Pulse verbreitert ("50%+X") sind und bei dem die jeweils eine logische "0" darstellende Pulse verschmälert ("50%-X") sind.

Die hier vorgestellten Ausführungsformen können entsprechend den oben skizzierten Prinzipien verfahren.

Die Problematik der eingangs genannten Fortpflanzung dieser Signalverzerrung kann insbesondere dann entstehen, wie in Fig. 2 und 3 veranschaulicht, wenn die beiden Schwellenwerte 34 und 35 bei allen Eingangs-Sendeempfänger der Slave-Einheiten nicht identisch zueinander sind. Im Bitmuster kann dies zum Beispiel zu einer Verbreiterung von logisch "1" Bitpulsen und damit zu einer entsprechenden Verschmälerung von logisch "0" Bitpulsen führen, wenn der erste Schwellenwert 35 kleiner ist als der zweite Schwellenwert 34.

Da bei herkömmlicher Weiterleitung des Signals gemäß Fig. 2 das von dem zum Beispiel eingangsseitig platzierten Sendeempfänger generierte Bitmuster 2111 von dem ausgangsseitig platzierten Sendeempfänger wieder in ein Signal 219 umgewandelt wird, das auf einem Leitungsabschnitt ausgegeben wird, entstehen auf diesem Leitungsabschnitt Signale, bei denen die Schaltflanken nicht mehr denselben Abstand voneinander haben, sondern sich breite Pulse und schmale Pulse abwechseln, wie in Fig. 2 veranschaulicht. Diese Signalverzerrung pflanzt sich dann in der nächsten Slave-Einheit fort, wenn diese das Signal 219 empfängt und in ein weiteres slaveeinheitinternes Bitmuster 2191 umwandelt. Dort entsteht das slaveeinheitinterne Bitmuster 2191, bei dem die eine logische "1" darstellende Bitpulse noch weiter verbreitert sind ("50%+2X") und bei dem die eine logische "0" darstellende Pulse noch weiter verschmälert ("50%-2X") sind.

Um dieser Signalverzerrung entgegenzuwirken, ist erfindungsgemäß vorgesehen, dass die erste Slave-Einheit 121 das von der Master-Einheit 110 bereitgestellte und über den ersten Leitungsabschnitt 131 der Leitungsanordnung empfangene Anforderungssignal 211 invertiert und als invertiertes Anforderungssignal 212 auf dem zweiten, zu der benachbarten zweiten Slave-Einheit 122 führenden Leitungsabschnitt 132 der Leitungsanordnung ausgibt.

Dazu sind bei einer Ausführungsform, wie sie in Fig. 4 veranschaulicht ist, bei der ersten Slave-Einheit 121 vier Vergleichseinheiten 1219-1 bis 1219-4 vorgesehen, die jeweils ein XOR-Gatter umfassen können oder als XOR-Gatter ausgebildet sind. Ein XOR-Gatter ist ein Gatter mit mehreren Eingängen und einem Ausgang, bei dem der Ausgang genau dann logisch "1" ausgibt, wenn an einer ungeraden Anzahl von Eingängen logisch "1" anliegt und an den restlichen logisch "0".

Außerdem ist eine Adress-Einheit 1218 vorgesehen, die in Abhängigkeit von der der Slave-Einheit zugewiesenen Adresse entweder logisch "0" oder logisch "1" ausgibt und damit die Invertierung steuert.

Die beiden Vergleichseinheiten 1219-4 und 1219-1, die dem Eingangs-Sendeempfänger 1211 zugeordnet sind, empfangen dieses von der Adress-Einheit 1218 ausgegebene Signal, und die beiden Vergleichseinheiten 1219-2 und 1219-3, die dem Ausgangs-Sendeempfänger 1212 zugeordnet sind, empfangen das invertierte Ausgabesignal der Adress-Einheit 1218. Hierzu kann ein Invertierer 1217 vorgesehen sein, wie veranschaulicht ist.

Neben dem (invertierten oder nicht invertierten) Adresssignal empfangen die Vergleichseinheiten 1219-1 bis 1219-4 bei dem gezeigten Beispiel jeweils nur ein zweites Eingangssignal, das entweder von der Logikkomponente 1215 oder einem der Sendeempfänger 1211, 1212 bereitgestellt wird.

Empfängt die betreffende Vergleichseinheit als (invertiertes oder nicht invertiertes) Adresssignal eine "0", erfolgt in der betreffenden Vergleichseinheit keine Invertierung und das zweite Eingangssignal wird gleichermaßen ausgegeben. Empfängt die betreffende Vergleichseinheit als (invertiertes oder nicht invertiertes) Adresssignal eine "1", erfolgt in der betreffenden Vergleichseinheit eine Invertierung und das zweite Eingangssignal wird invertiert ausgegeben.

Durch die Anordnung aus den Vergleichseinheiten 1219-1 bis 1219-4, der Adress-Einheit 1218 und dem Invertierer 1217 wird sichergestellt, dass die Slave-Einheit 121 jedes eingehende Anforderungssignal und Antwortsignal erst nach einer (verzögerungsfreien) Invertierung weiterleitet. Je nach Wert des von der Adress-Einheit 1218 ausgegeben Signals gibt sie ihrerseits Antwortsignale entweder invertiert oder nicht invertiert (also regulär) auf dem betreffenden Leitungsabschnitt aus. Gleichzeitig ist die Anordnung aus den Vergleichseinheiten 1219-1 bis 1219-4, der Adress-Einheit 1218 und dem Invertierer 1217 derart konfiguriert, dass die Logikkomponente 1215 stets mit regulären (also nicht-invertierten) Signalen arbeitet, also nicht-invertierte Signale empfängt und Signal nicht-invertiert ausgibt.

Neben der in Fig. 4 gezeigten Konfiguration sind selbstverständlich auch andere technische Lösungen denkbar, die das Prinzip der Signalinvertierung zur Vermeidung der oben geschilderten Signalverzerrung umsetzen.

Die Fig. 3 veranschaulicht schematisch und exemplarisch, wie sich eine solche Signalinvertierung mittels der in Fig. 4 dargestellten Komponenten auswirken kann. Demnach wird das slaveeinheitinterne Bitmuster 2111 nicht unverändert dem Ausgangs-Sendeempfänger 1212 zugeführt, sondern zuerst in das Bitmuster 2120 invertiert. Hierzu wird das slaveeinheitinterne Bitmuster 2111, das von dem Empfangsmodul RX des Eingangs-Sendempfängers 1211 (s. Fig. 5A/B) bereitgestellt wird, zunächst der ersten Vergleichseinheit 1219-1 zugeführt. Diese Einheit 1219-1 gibt - bei entsprechendem Wert des Ausgabesignals der Adresseinheit 1218 - das Bitmuster 2111 (das nicht invertiert ist) unverändert, insbesondere nicht-invertiert, als Signal 1219-11 an die Logikkomponente 1215 weiter. Diese leitet es ohne vorherige Auswertung, also verzögerungsfrei, an die zweite Vergleichseinheit 1219-2 weiter. Hier erfolgt aufgrund des parallel zugeführten invertierten (s. Einheit 1217) Ausgabesignals der Adresseinheit 1218 die Invertierung. Dadurch entsteht das Bitmuster 2120, welches dem Ausgangs-Sendempfänger 1212 zugeführt ist, nämlich dessen Sendemodul TX (s. Fig. 5A, 5B). Der Ausgangs-Sendempfänger wandelt das Bitmuster 2120 in das Signal 212 und gibt es (ggf. in Abhängigkeit des Signals 1212-1, Halb-Duplex-Modus, Fig. 1B/5B) auf dem zweiten Leitungsabschnitt 212 aus. Diese Invertierung kann, wie aufgezeigt, insbesondere verzögerungsfrei erfolgen (die Verarbeitungszeit durch die Einheiten 1219-1 und 1219-2 ist vernachlässigbar).

Es versteht sich, dass bei entgegengesetztem Wert des Ausgabe-Signals der Adresseinheit 1218 umgekehrt vorgegangen werden würde: Dann würde das Signal 2111 als invertiertes Signal interpretiert werden und durch die erste Vergleichseinheit 1219-1 in ein nicht-invertiertes Signal überführt werden und als solches der Logikkomponente 1215 zugeführt werden. Die zweite Vergleichseinheit 1219-2 würde keine Invertierung vornehmen, so dass das Signal 212 nicht-invertiert ausgegeben werden würde.

Aufgrund der unsymmetrischen Schaltschwelle des Eingangs-Sendeempfängers der zweiten Slave-Einheit 122 wird die von der ersten Slave-Einheit 121 verursachte Pulsverbreiterung wieder kompensiert und das Bitmuster 2121, welches der Eingangs-Sendeempfänger der zweiten Slave-Einheit 122 produziert, weist wieder eine Struktur auf, gemäß der die Bitpulse eine weitgehend homogen Breite aufweisen.

Natürlich sollte bei Weiterleitung von Antwortsignalen analog vorgegangen werden. Somit ist die erste Slave-Einheit 121 z.B. weiter ausgebildet, ein von der zweiten Slave-Einheit 122 bereitgestelltes und über den zweiten Leitungsabschnitt 132 empfangenes invertiertes Antwortsignal 253 zu invertieren und als nicht-invertiertes Antwortsignal 254 auf dem ersten, zur Master-Einheit 110 führenden Leitungsabschnitt 131 auszugeben. Hierzu wandelt der Ausgangs-Sendeempfänger 1212 mittels seines Empfangsmoduls RX (s. Fig.5A/B) das (invertierte) Antwortsignal 253 in ein Bitmuster 1212-2 um, führt es der dritten Vergleichseinheit 1219-3 zu, welche (bei entsprechendem Wert des Ausgabe-Signals der Adresseinheit 1218) eine Invertierung vornimmt und der Logikkomponente 1215 das (nun nicht mehr invertierte) Bitmuster 1219-31 zuführt. Die Logikkomponente 1215 leitet dieses Bitmuster 1219-31 unverändert an die vierte Vergleichseinheit 1219-4 weiter, welche (bei entsprechendem Wert des Ausgabe-Signals der Adresseinheit 1218) keine Invertierung vornimmt, sondern das nicht-invertierte Bitmuster 1219-31 unverändert als Bitmuster 1219-41 dem Eingangs-Sendempfänger 1211, also seinem Sendemodul TX (s. Fig. 5A/B), zuführt, welches das Bitmuster 1219-41 in das (nicht invertierte) Signal 254 wandelt und auf dem ersten Leitungsabschnitt 131 ausgibt.

Die zweite Slave-Einheit 122 kann in Analogie zu dem oben dargestellten Prinzip das von der ersten Slave-Einheit 121 ausgegebene und über den zweiten Leitungsabschnitt 132 empfangene invertierte Anforderungssignal 212 invertieren und als nicht-invertiertes Anforderungssignal 213 auf dem dritten, zu der benachbarten dritten Slave-Einheit 123 führenden Leitungsabschnitt 133 der Leitungsanordnung ausgeben, sowie ein von der dritten Slave-Einheit 123 bereitgestelltes und über den dritten Leitungsabschnitt 133 empfangenes nicht-invertiertes Antwortsignal 252 invertieren und als das invertierte Antwortsignal 253 auf dem zweiten, zur ersten Slave-Einheit 121 führenden Leitungsabschnitt 132 ausgeben.

Dementsprechend kann die dritte Slave-Einheit 123 ausgebildet sein, dass nicht-invertierte Anforderungssignal 213 zu empfangen und als invertiertes Anforderungssignal 214 der vierten und letzten Slave-Einheit 124 über den vierten Leitungsabschnitt 134 zuzuleiten. Zum Beispiel gibt die vierte Slave-Einheit 124 das Antwortsignal 251 invertiert auf den vierten Leitungsabschnitt 134, und die dritte Slave-Einheit 123 empfängt dieses, invertiert es und gibt es als nicht invertiertes Antwortsignal 252 auf den dritten Leitungsabschnitt 133 aus.

Die Master-Einheit 110 und die Slave-Einheiten 121-124 des Bussystems 100 können also so konfiguriert sein, dass auf einem jeweiligen Leitungsabschnitt 131-134 die Signale entweder allesamt invertiert sind, oder nicht-invertiert. Zum Beispiel sind die Signale auf dem ersten Leitungsabschnitt 131 nicht-invertiert, auf dem zweiten Leitungsabschnitt 132 invertiert, auf dem dritten Leitungsabschnitt 133 nicht-invertiert, und auf dem vierten Leitungsabschnitt 134 wieder invertiert. Dementsprechend geben beispielsweise die Adress-Einheiten 1218 der ersten und dritten Slave-Einheit 121, 123 jeweils eine logische "0" aus, und die Adress-Einheiten 1218 der zweiten und vierten Slave-Einheit 122, 124 jeweils eine logische "1".

Bei einer Ausführungsform des Bussystems 100 sind die Eingangs-Sendeempfänger aller Slave-Einheiten 121 bis 124 identisch zueinander ausgeführt, insbesondere mit besagter unsymmetrischer Schaltschwelle. Insbesondere kann jeder Eingangs-Sendeempfänger entsprechend dem selben ersten Schwellenwert 35 und entsprechend dem selben zweiten Schwellenwert 34 konfiguriert sein. Entsprechendes kann für die Ausgangs-Sendeempfänger aller Slave-Einheiten 121 bis 124 gelten.

Die Signalinvertierung kann in jeder der Slave-Einheiten 121 bis 124 mittels besagter Einheiten 1219-1 bis 1219-4, 1217 und 1218 gesteuert werden, insbesondere also ohne Veränderung der Sendeempfänger 1211 und 1212 sowie ohne Veränderung der Logikkomponente 1215. Ebenfalls kann die Signalinvertierung derart erfolgen, dass keine Anpassungen der Leitungsanordnung 131-134 erforderlich ist.

## Patentansprüche

1. Bussystem (100), aufweisend eine Daisy-Chain-Konfiguration und umfassend eine Master-Einheit (110) sowie eine Vielzahl Slave-Einheiten (121, 122), die der Master-Einheit (110) über eine Leitungsanordnung (131, 132) seriell nachgeschaltet sind, **dadurch gekennzeichnet dass** eine der Master-Einheit (110) zuerst nachgeschaltete erste Slave-Einheit (121) ausgebildet ist,
- ein von der Master-Einheit (110) bereitgestelltes und über einen ersten Leitungsabschnitt (131) der Leitungsanordnung empfangenes Anforderungssignal (211) zu invertieren und als invertiertes Anforderungssignal (212) auf einem zweiten, zu einer benachbarten zweiten Slave-Einheit (122) führenden Leitungsabschnitt (132) der Leitungsanordnung auszugeben.

2. Bussystem (100) nach Anspruch 1, wobei die erste Slave-Einheit (121) weiter ausgebildet ist,
- ein von der zweiten Slave-Einheit (122) bereitgestelltes und über den zweiten Leitungsabschnitt (132) empfangenes invertiertes Antwortsignal (253) zu invertieren und als nicht-invertiertes Antwortsignal (254) auf dem ersten, zur Master-Einheit (110) führenden Leitungsabschnitt (131) auszugeben.

3. Bussystem (100) nach Anspruch 1 oder 2, wobei die zweite Slave-Einheit (122) ausgebildet ist:
- das von der ersten Slave-Einheit (121) ausgegebene und über den zweiten Leitungsabschnitt (132) empfangene invertierte Anforderungssignal (212) zu invertieren und als nicht-invertiertes Anforderungssignal (213) auf einem dritten, zu einer benachbarten dritten Slave-Einheit (123) führenden Leitungsabschnitt (133) der Leitungsanordnung auszugeben; und/oder
- ein von der dritten Slave-Einheit (123) bereitgestelltes und über den dritten Leitungsabschnitt (133) empfangenes nicht-invertiertes Antwortsignal (252) zu invertieren und als das invertierte Antwortsignal (253) auf dem zweiten, zur ersten Slave-Einheit (121) führenden Leitungsabschnitt (132) auszugeben.

4. Bussystem (100) nach einem der vorstehenden Ansprüche, wobei die Master-Einheit (110) und die Slave-Einheiten (121, 122) so konfiguriert sind, dass in jedem Leitungsabschnitt (131, 132) die Anforderungssignale und die Antwortsignale entweder beide invertiert oder beide nicht-invertiert sind.

5. Bussystem (100) nach einem der vorstehenden Ansprüche, wobei jede Slave-Einheit (121, 122) eine eindeutige aufsteigend nummerierte Adresse aufweist.

6. Bussystem (100) nach einem der vorstehenden Ansprüche, wobei die über die Leitungsanordnung übertragenen Signale manchestercodiert sind.

7. Bussystem (100) nach einem der vorstehenden Ansprüche, wobei jede der Slave-Einheiten (121, 122) empfangene und weiterzuleitende Signale verzögerungsfrei ausgibt, indem sie die Signale keiner Bit-Recovery unterzieht.

8. Bussystem (100) nach einem der vorstehenden Ansprüche, wobei das Bussystem (100) für eine differentielle Signalübertragung ausgebildet ist.

9. Bussystem (100) nach einem der vorstehenden Ansprüche, wobei jede der Slave-Einheiten (121) einen Eingangs-Sendeempfänger (1211) mit unsymmetrischer Schaltschwelle (34, 35) aufweist.

10. Bussystem (100) nach einem der vorstehenden Ansprüche, wobei jede der Slave-Einheiten (121) einen Ausgangs-Sendeempfänger (1212) mit unsymmetrischer Schaltschwelle (34, 35) aufweist.

11. Bussystem (100) nach den vorstehenden Ansprüchen 8 bis 10, wobei der Eingangs-Sendeempfänger (1211) und der Ausgangs-Sendeempfänger (1212) mit dem EIA-485 Standard kompatibel sind.

12. Bussystem (100) nach einem der vorstehenden Ansprüche, wobei jede der Slave-Einheiten (121) eine Logikkomponente (1215) umfasst, die für eine massebezogene Signalverarbeitung konfiguriert ist.

13. Bussystem (100) nach einem der vorstehenden Ansprüche, wobei jeder der Leitungsabschnitte (131, 132) eine Länge von wenigstens einem halben Meter aufweist.

14. Bussystem (100) nach einem der vorstehenden Ansprüche, wobei wenigstens eine der Slave-Einheiten (121, 122) einen Teil eines Messgerätes aus der folgenden Aufzählung bildet:
- einen Drehgeber;
- ein Winkelmessgerät;
- ein Längenmessgerät;
- einen Messtaster;
- einen schaltenden Taster.

15. Slave-Einheit (121) für ein Bussystem (100), wobei das Bussystem (100) eine Daisy-Chain-Konfiguration aufweist und eine Master-Einheit (110) umfasst, der über eine Leitungsanordnung (131, 132) eine Vielzahl Slave-Einheiten seriell nachgeschaltet werden können, **dadurch gekennzeichnet dass** die Slave-Einheit (121) ausgebildet ist,
- ein von der Master-Einheit (110) bereitgestelltes und über einen ersten Leitungsabschnitt (131) der Leitungsanordnung empfangenes Anforderungssignal (211) zu invertieren und als invertiertes Anforderungssignal (212) auf einem zweiten, zu einer benachbarten zweiten Slave-Einheit (122) führenden Leitungsabschnitt (132) der Leitungsanordnung auszugeben.

## Claims

1. Bus system (100) having a daisy chain configuration and comprising a master unit (110) and a multiplicity of slave units (121, 122) which are connected in series downstream of the master unit (110) via a line arrangement (131, 132), **characterized in that**
a first slave unit (121) connected downstream of the master unit (110) first is designed
- to invert a request signal (211) provided by the master unit (110) and received via a first line section (131) of the line arrangement and to output it as an inverted request signal (212) on a second line section (132) of the line arrangement, said second line section leading to a adjacent second slave unit (122).

2. Bus system (100) according to Claim 1, wherein the first slave unit (121) is also designed
- to invert an inverted response signal (253) provided by the second slave unit (122) and received via the second line section (132) and to output it as a non-inverted response signal (254) on the first line section (131) leading to the master unit (110).

3. Bus system (100) according to Claim 1 or 2, wherein the second slave unit (122) is designed:
- to invert the inverted request signal (212) output by the first save unit (121) and received via the second line section (132) and to output it as a non-inverted request signal (213) on a third line section (133) of the line arrangement, said third line section leading to an adjacent third slave unit (123) and/or
- to invert a non-inverted response signal (252) provided by the third slave unit (123) and received via the third line section (133) and to output it as the inverted response signal (253) on the second line section (132) leading to the first slave unit (121).

4. Bus system (100) according to one of the preceding claims, wherein the master unit (110) and the slave units (121, 122) are configured in such a manner that the request signals and the response signals are either both inverted or both non-inverted in each line section (131, 132) .

5. Bus system (100) according to one of the preceding claims, wherein each slave unit (121, 122) has a unique address numbered in ascending order.

6. Bus system (100) according to one of the preceding claims, wherein the signals transmitted via the line arrangement are Manchester-coded.

7. Bus system (100) according to one of the preceding claims, wherein each of the slave units (121, 122) outputs signals which are received and are to be forwarded without delay by not subjecting the signals to any hit recovery.

8. Bus system (100) according to one of the preceding claims, wherein the bus system (100) is designed for differential signal transmission.

9. Bus system (100) according to one or the preceding claims, wherein each of the slave units (121) has an input transceiver (1211) with an asymmetrical switching threshold (34, 35).

10. Bus system (100) according to one of the preceding claims, wherein each of the slave units (121) has an output transceiver (1212) with an asymmetrical switching threshold (34, 35).

11. Bus system (100) according to the preceding Claims 8 to 10, wherein the input transceiver (1211) and the output transceiver (1212) are compatible with the EIA 485 standard.

12. Bus system (100) according to one of the preceding claims, wherein each of the slave units (121) comprises a logic component (1215) which is configured for earth-based signal processing.

13. Bus system (100) according to one of the preceding claims, wherein each of the line sections (131, 132) has a length of a least half a metre.

14. Bus system (100) according to one of the preceding claims, wherein at least one of the slave units (121, 122) forms part of a measuring device from the following list:
- a rotary encoder;
- an angle measuring device;
- a length measuring device;
- a measuring probe;
- a switching probe.

15. Slave unit (121) for a bus system (100), wherein the bus system (100) has a daisy chain configuration and comprises a master unit (110), downstream of which a multiplicity of slave units can be connected in series via a line arrangement (131, 132), **characterized in that**
the slave unit (121) is designed
- to invert a request signal (211) provided by the master unit (110) and received via a first line section (131) of the line arrangement and to output it as an inverted request signal (212) on a second line section (132) of the line arrangement, said second line section leading to an adjacent second slave unit (122).

## Revendications

1. Système de bus (100), présentant une configuration en guirlande et comprenant une unité maître (110) ainsi qu'une pluralité d'unités esclaves (121, 122) qui sont connectées en série en aval de l'unité maître (110) par un agencement de lignes (131, 132),
**caractérisé en ce qu'**une première unité esclave (121) connectée en premier en aval de l'unité maître (110) est réalisée
- pour inverser un signal de demande (211) fourni par l'unité maître (110) et reçu sur un premier tronçon de ligne (131) de l'agencement de lignes et pour le sortir sous forme de signal de demande inversé (212) sur un deuxième tronçon de ligne (132) de l'agencement de lignes, menant à une deuxième unité esclave voisine (122).

2. Système de bus (100) selon a revendication 1, dans lequel la première unité esclave (121) est en outre réalisée
- pour inverser un signal de réponse inversé (253) fourni par la deuxième unité esclave (122) et reçu sur le deuxième tronçon de ligne (132) et pour le sortir sous forme de signal de réponse non inversé (234) sur le premier tronçon de ligne (131) menant à l'unité maître (122).

3. Système de bus (100) selon la revendcation 1 ou 2, dans lequel la deuxième unité esclave (122) est réalisée :
- pour inverser le signal de demande inversé (212) émis par la première unité esclave (121) et reçu sur le deuxième tronçon de ligne (132) et pour le sortir sous forme de signal de demande non inversé (213) sur un troisième tronçon de ligne (133) de l'agencement de lignes, menant à une troisième unité esclave (123) voisine ; et/ou
- pour inverser un signal de réponse non inversé (252) fourni par la troisième unité esclave (123) et reçu sur le troisième tronçon de ligne (133) et pour le sortir sous la forme du signal de réponse inversé (253) sur le deuxième tronçon de ligne (132) menant à la première unité esclave (121).

4. Système de bus (100) selon l'une quelconque des revendications précédentes, dans lequel l'unité maître (110) et les unités esclaves (121, 122) sont configurées de telle sorte que sur chaque tronçon de ligne (131, 132) les signaux de demande et les signaux de réponse sont tous les deux inversés ou ne sont tous les deux pas inversés.

5. Système de bus (100) selon l'une quelconque des revendications précédentes, dans lequel chaque unité esclave (121, 122) présente une adresse univoque numérotée par ordre ascendant.

6. Système de bus (100) selon l'une quelconque des revendications précédentes, dans lequel les signaux transmis par l'intermédiaire de l'agencement de lignes sont soumis à un codage Manchester.

7. Système de bus (100) selon l'une quelconque des revendications précédentes, dans lequel chacune des unités esclaves (121, 122) sort sans retard des signaux reçus et à transférer en ne soumettant les signaux à aucune ion de bits.

8. Système de bus (100) selon l'une quelconque des revendications précédentes, dans lequel le système de bus (100) est réalisé pour une transmission de signal différentielle.

9. Système de bus (100) selon l'une que des revendications précédentes, dans lequel chacune des unités esclaves (121) présente un émetteur-récepteur d'entrée (1211) à seuil de commutation asymétrique (34, 35).

10. Système de bus (100) selon l'une quelconque des revendications précédentes, dans lequel chacune des unités esclaves (121) présente un émetteur-récepteur de sortie (1212) à seuil de commutation asymétrique (34, 35).

11. Système de bus (100) selon les revendications précédentes 8 à 10, dans lequel l'émetteur récepteur d'entrée (1211) et l'émetteur-récepteur de sortie (1212) sont compatibles avec la norme EIA-485.

12. Système de bus (100) selon l'une quelconque des revendications précédentes, dans lequel chacune des unités esclaves (121) comprend un composant logique (1215) qui est configuré pour un traitement de signal asymétrique.

13. Système de bus (100) selon l'une quelconque des revendications précédentes, dans lequel chacun des tronçons de ligne (131, 132) présente une longueur d'au moires un demi-mètre.

14. Système de bus (100) selon l'une quelconque des revendications précédentes, dans lequel au moins l'une des unités esclaves (121, 122) fait partie d'un appareil de mesure de la liste suivante :
- un encodeur ;
- un appareil de mesure d'angle ;
- un appareil de mesure de longueur ;
- un capteur de mesure ;
- un palpeur à commutation.

15. Unité esclave (121) pour un système de bus (100), dans laquelle le système de bus (100) présente une configuration en guirlande et comprend une unité maître (110) avec laquelle une pluralité d'unités esclaves peut être connectée en série par l'intermédiaire d'un agencement de lignes (131, 132),
**caractérisée en ce que** l'unité esclave (121) est réalisée
- pour inverser un signal de demande (211) fourni par l'unité maître (110) et reçu sur un premier tronçon de ligne (131) de l'agencement de lignes et pour le sortir sous forme de signal de demande inversé (212) sur un deuxième tronçon de ligne (132) de l'agencement de lignes, menant à une deuxième unité esclave voisine (122).
